# EUROPEAN PATENT SPECIFICATION

(11) **EP 3 069 532 B1**
(45) Date of publication and mention of the grant of the patent: **01.05.2019**
(21) Application number: 13897430.8
(22) Date of filing: 12.11.2013
(51) Int. Cl.: H04W 4/44, H04L 29/08, H04W 4/02

(54) **SCHEDULING DOWNLOAD OF DATA OF AN ON-LINE SERVICE**
PLANUNG DES HERUNTERLADENS VON DATEN EINES ONLINE-DIENSTES
PROGRAMMATION DU TÉLÉCHARGEMENT DE DONNÉES D'UN SERVICE EN LIGNE

(43) Date of publication of application: 21.09.2016
(73) Proprietor: Harman International Industries, Incorporated, Stamford, Connecticut 06901 (US)
(72) Inventor: MA, Jianjun, Shanghai 200233 (CN)
(74) Representative: Grünecker Patent- und Rechtsanwälte PartG mbB
(86) International application number: PCT/CN2013/086935
(87) International publication number: WO 2015/070371

(56) References cited:
- EP-A1- 2 658 211
- EP-A2- 1 209 930
- EP-A2- 1 209 930
- CN-A- 103 298 138
- JP-A- 2010 048 797
- JP-B2- 4 075 649
- US-A1- 2012 238 297

## Description

### TECHNICAL FIELD

The present disclosure generally relates to scheduling download of data of an on-line service.

### BACKGROUND

Nowadays, more and more people use on-line services on their mobile devices such as smart phones. If wireless connection gets weak when a user is using an on-line service such as on-line movie, on-line music and on-line navigation service etc. on a mobile device, the mobile device may not be able to download necessary contents in time, and the service may be halted.
EP 2 658 211 A1 relates to a method and an apparatus for managing downloading of data to a user's mobile device which is travelling along a travel route (R), the mobile device downloading data via a communication network comprising a plurality of access points (10A, 10B). A group of access points being located along the travel route is identified and, for each identified access point, an associated covered route segment of the travel route corresponding to the part of the travel route which is covered by a coverage area (CS1-CS5) of the respective access point is determined. For each covered route segment, an estimated segment travel time of the mobile device along the respective covered route segment is determined and a data volume to be provided to the mobile device for download when being located on the respective covered route segment is determined on the basis of the estimated segment travel time. Then, when the mobile device is located on a specific covered route segment of the covered route segments, the data volume determined for the specific covered route segment is provided to the mobile device for download via the access point being associated with the specific covered route segment.
EP1209930 A2 relates to mobile wireless communication, and more particularly, to a method of planning which of various wireless communication options to utilize for wireless communication in a mobile environment when one or more wireless communication options may be available for use, based on the location of the mobile user, the route the mobile user is travelling, and the availability of the various wireless communication options along the route.
US 2012/238297 relates to a communication controller including a processor. The processor performs a process of estimating a moving route of a mobile station connected through a network and a process of determining a timing to start transmission of data to be transmitted between the network and the mobile station based on a prediction result of a communication quality of the mobile station according to the estimated moving route and a size of the data.

### SUMMARY

The invention is specified by the mehod and the system independent claims 1 and 5, repsectively. Further embodimentents are secified in the dependent claims.

In one embodiment useful for understanding the invention, a method for downloading data of an on-line service is provided. The method may include: a mobile device obtaining its route; obtaining a download scheme which is calculated based on information of download speeds along the route; and downloading data of the on-line service according to the download scheme to improve continuity of the on-line service on the mobile device along the route.

In some embodiments useful for understanding the invention, the route may be obtained based on a first position where the mobile device is located and a destination. In some embodiments, the route may be calculated by a navigation system. Along the route, download speeds of the mobile device may change due to various factors, such as weather, signal strength,
congestion, and the like.

In some embodiments, the information of download speeds along the route may be provided by a server. The sever may store historical data of download speeds along the route, which historical data may be collected from a plurality of mobile devices which have been passed at least a section of the route. The information of download speeds along the route can be obtained based on the historical data. In some embodiments, the download scheme may be calculated based on the information of download speeds along the route by the mobile device or the server.

In some embodiments, the mobile device may obtain historical data of download speeds along the route from the server, and calculate the information of download speeds along the route itself.

In one embodiment, a method for generating a scheme of downloading data of an on-line service is provided. The method may include: obtaining a route of a mobile device; obtaining information of download speeds along the route; obtaining traveling speed of the mobile device; and calculating a download scheme for the mobile device based on the route, the information of download speeds along the route and the traveling speed.

In some embodiments, the information of download speeds along the route may be obtained based on historical data of download speeds along the route.

In some embodiments, the information of download speeds along the route may be obtained further based on estimation of time points at which the mobile device arrives at corresponding positions along the route.

In one embodiment, a method for downloading parts of a program is provided. The method may include: a mobile device obtaining its route; obtaining information of parts of the program; obtaining a first time point, where the first time point is calculated based on the information of the parts of the program and information of download speeds along the route; and starting to download one of the parts of the program at the first time point.

In some embodiments, the route may be obtained based on a first position where the mobile device is located and a destination. Along the route, download speed of the mobile device may change due to various factors, such as weather, signal strength, congestion, and the like. In some embodiments, the route may be calculated by a navigation system. In some embodiments, the route may be predicted based on a direction the mobile device heads.

In some embodiments, the information of the parts of the program may include sizes and durations of the parts of the program.

In some embodiments, obtaining the first time point may include: sending, to a server, its route and a request for obtaining the information of download speeds along the route; receiving, from a sever, the information of download speeds along the route; and calculating the first time point based on the information of the parts of the program and the received information of download speeds along the route. The sever may store historical data of download speeds along the route, which historical data may be collected from a plurality of mobile devices which have been passed at least a section of the route. The information of download speeds along the route can be made based on the historical data.

In some embodiments, the information of download speeds along the route may be made further based on estimation of time points at which the mobile device arrives at corresponding positions along the route. Download speeds along the route may change over time based on certain conditions. For example, the download speed of a section along the route may change between weekdays and weekends.

In some embodiments, the mobile device may send, to the sever, its route, the information of the parts of the program and a request for obtaining the first time point, and obtain the first time point from the sever. The sever may calculate the first time point based on the route, the information of the parts of the program received from the mobile device and its pre-stored historical data of download speeds along the route.

In some embodiments, the mobile device may obtain historical data of download speeds along the route from the server, and calculate the information of download speeds along the route itself.

In one embodiment, a method for downloading parts of programs is provided. The method may include: a mobile device obtaining its route; obtaining information of parts of a plurality of programs; obtaining a download scheme based on the information of the parts of the plurality of programs and information of download speeds along the route; and starting to download one of the parts of the plurality of programs according to the download scheme.

In one embodiment, a method for scheduling download of parts of a program is provided. The method may include: obtaining a route of a mobile device and information of parts of the program; obtaining information of download speeds along the route; calculating a first time point based on the information of the parts of the program and the information of download speeds along the route; and instructing the mobile device to start downloading a part of the program at the first time point.

In one embodiment, a system mounted on a vehicle for downloading data of an on-line service is provided. The system may include a processing device configured to: obtain a route of the vehicle; obtain a download scheme which is calculated based on information of download speeds along the route; and instruct the system to start downloading data of the on-line service according to the download scheme to improve continuity of the on-line service on the mobile device along the route.

In some embodiments, the system may further include a communication device, and the processing device may be further configured to: generate a request for obtaining the information of download speeds along the route; control the communication device to send, to a server, its route and the request for obtaining the information of download speeds along the route; and calculate the download scheme based on the information of download speeds along the route received from the server by the communication device.

In some embodiments, the information of download speeds along the route may be calculated based on estimation of time points at which the mobile device arrives at corresponding positions along the route.

In some embodiments, the processing device may be further configured to: generate a request for obtaining the download scheme; and control the communication device to send, to the sever, its route, and the request for obtaining the download scheme.

In some embodiments, the processing device may be further configured to: obtain historical data of download speeds along the route; and calculate the information of download speeds along the route itself.

In one embodiment, a system mounted on a vehicle for downloading parts of a program is provided. The system may include a processing device configured to: obtain a route of the vehicle; obtain information of parts of the program; obtain a first time point, where the first time point is calculated based on the information of the parts of the program and information of download speeds along the route; and instruct the system to start downloading one of the parts of the program at the first time point.

In some embodiments, the system may include a communication device, and the processing device may be further configured to: generate a request for obtaining the information of download speeds along the route; control the communication device to send, to a server, its route and the request for obtaining the information of download speeds along the route; and calculate the first time point based on the information of the parts of the program and the information of download speeds along the route received from the server by the communication device.

In some embodiments, the information of download speeds along the route may be calculated based on estimation of time points at which the mobile device arrives at corresponding positions along the route.

In some embodiments, the processing device may be configured to: generate a request for obtaining the first time point; and control the communication device to send, to the sever, its route, the information of the parts of the program and the request for obtaining the first time point.

In some embodiments, the processing device may be configured to: obtain historical data of download speeds along the route, and calculate the information of download speeds along the route itself.

In one embodiment, a system mounted on a vehicle for downloading parts of programs is provided. The system may include a processing device configured to: obtain a route of the vehicle; obtain information of parts of a plurality of programs; obtain a download scheme based on the information of the parts of the plurality of programs and information of download speeds along the route; and instruct the system to start downloading one of the parts of the plurality of programs according to the download scheme.

In one embodiment, a server is provided. The server may include a communication device and a processing device. The processing device may be configured to: obtain information of download speeds along a route of a mobile device; calculate a first time point based on information of parts of a program and the information of download speeds along the route; and control the communication device to inform the mobile device the first time point.

In some embodiments, the processing device may be configured to obtain the information of download speeds along the route based on historical data of download speeds at various positions along the route.

In some embodiments, the processing device may be configured to obtain the information of download speeds along the route further based on estimation of time points at which the mobile device arrives at corresponding positions along the route.

### BRIEF DESCRIPTION OF THE DRAWINGS

The foregoing and other features of the present disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings.
FIG. 1 schematically illustrates a flow chart of a method 100 for downloading a program according to a first embodiment;
FIG. 2 schematically illustrates different positions of a first vehicle when travelling on a road;
FIG. 3 schematically illustrates a curve which shows corresponding relations between time points and download speeds;
FIG. 4 schematically illustrates analysing the curve shown in FIG. 3 in conjunction with information of parts of a program;
FIG. 5 schematically illustrates a flow chart of a method 200 for downloading a program according to a second embodiment;
FIG. 6 schematically illustrates a flow chart of a method 300 for downloading a program according to a third embodiment; and
FIG. 7 illustrates a schematic block diagram of a system 1000 which is in communication with a first server 1100 and a second server 1200 according to one embodiment.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the scope of the subject matter presented here. It will be readily understood that the aspects of the present disclosure, as generally described herein, and illustrated in the Figures, can be arranged, substituted, combined, and designed in a wide variety of different configurations, all of which are explicitly contemplated and make part of this disclosure.

Mobile devices, such as a smart phone or a head unit in a vehicle, connected to a wireless network are often used to download contents by users. For example, a driver may use a head unit to constantly update a map to assist driving, to listen to the internet radio, or to watch videos on line.

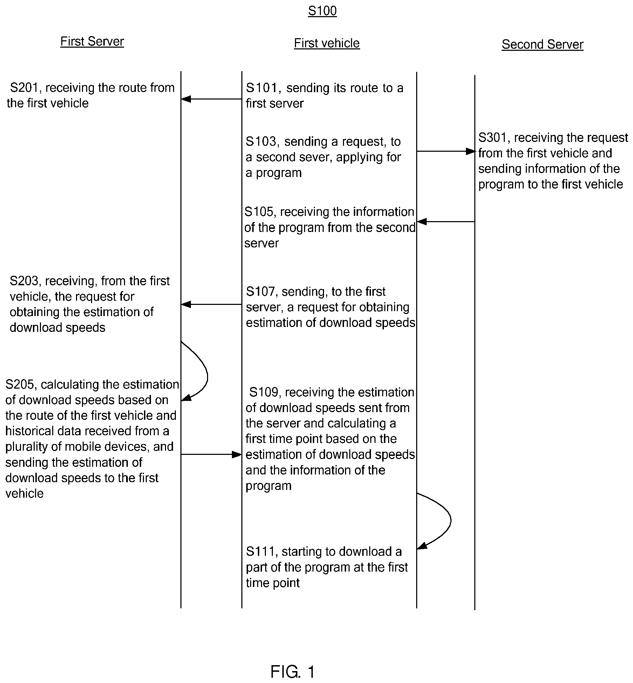

FIG. 1 schematically illustrates a flow chart of a method 100 for downloading a program according to a first embodiment.

Referring to FIG. 1, in S101, a first vehicle sending its route to a first server.

In some embodiments, the first vehicle may be equipped with a navigation system, and a route may be generated after a destination is entered. Then, a head unit of the first vehicle may send the route to the first server through a wireless network, such as a cellular network.

In some embodiments, the route may be updated and the updated route may be sent to the first server once it is generated.

In S201, the first server receiving the route from the first vehicle.

In S103, the first vehicle sending a request, to a second sever, applying for a program.

To use an on-line program, the first vehicle needs to send a request to the second server for obtaining information of the program. In some embodiments, the program may be an internet radio program, an on-line video, a digital map for navigation, or the like.

In S301, the second server receiving the request from the first vehicle and sending information of the program to the first vehicle.

Generally, a program includes a plurality of parts. In some embodiments, the information of the program may include content of parts of the program, information of parts of the program and a size of a portion of data of the program. The information of the parts of the program may include a size and duration of each part. The portion of data of the program may represent the least data which ensures the program to be not halted during a playing process.. In some embodiments, the first vehicle may know the size of the portion of data of the program inherently and the second server may not send it to the first vehicle.

In S105, the first vehicle receiving the information of the program from the second server.

In S107, the first vehicle sending, to the first server, a request for obtaining estimation of download speeds.

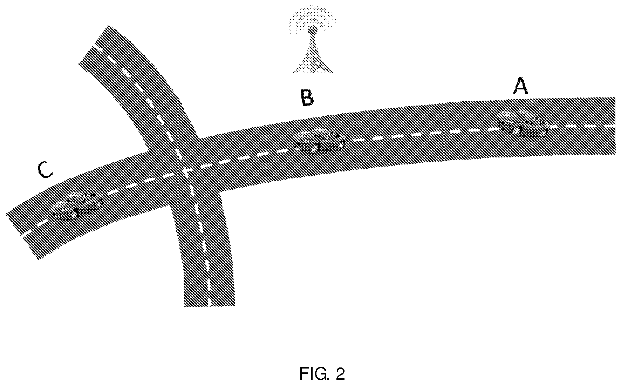

During travelling, the wireless network signal may change with the environment including humidity, the distance to a base station, the number of mobile devices connected to the base station, and so on. Therefore, the download speed changes for a vehicle at different positions or different time points even at a same position. Referring to FIG. 2, the first vehicle may have different download speeds at points A, B and C during travelling, respectively. In order to play a part of a program fluently, the part of the program should be downloaded in advance before the network signal or the download speed gets too poor. Therefore, the first vehicle needs to know when to start to download in advance, that is, estimation of download speeds on its route is desired in advance.

In some embodiments, the first vehicle may send the request for obtaining estimation of download speeds to the first server when it gets started and then send the request at predetermined time intervals, for example, 10 minutes.

In S203, the first server receiving, from the first vehicle, the request for obtaining the estimation of download speeds.

In S205, the first server calculating the estimation of download speeds based on the route of the first vehicle and historical data received from a plurality of mobile devices, and sending the estimation of download speeds to the first vehicle.

In some embodiments, the first server may have received a lot of historical data from a plurality of mobile devices, some of which have passed at least a section of the route of the first vehicle. In some embodiments, the historical data from the plurality of mobile devices may include position information, download speeds and moving speeds of the plurality of mobile devices, corresponding time points, humidity and signal strength. In some embodiments, the historical data may further include the numbers of vehicles connected to a base station. In some embodiments, there is a database on the server to store the historical data.

In some embodiments, the plurality of mobile devices may send the information to the server at predetermined time intervals, for example, one second. In some embodiments, the predetermined time interval may vary according to a moving speed of the plurality of mobile devices. Generally, the faster the vehicle moves, the less the predetermined time interval is.

In some embodiments, the first vehicle may be one of the plurality of mobile devices, that is, the first vehicle may send its position information, download speed and moving speed, corresponding time point, humidity and signal strength to the server at predetermined time intervals as well.

In some embodiments, the signal strength may be represented by Signal-to-Interference-plus-Noise-Ratio (SINR), which is well known in the art and not described in detail here. In some embodiments, the signal strength may be obtained from a base station. Generally, the farther a vehicle is away from a base station, the worse the signal strength is therein.

In some embodiments, a vehicle may obtain humidity from a weather forecast server based on the position of the vehicle.

In some embodiments, by analysing the historical data, the first server may build mapping relations between the different kinds of historical data and further obtain the download speeds at different positions at different time points. Specifically, the first server may estimate a time point T representing the time the first vehicle will reach a position P based on a moving speed of the first vehicle which may be the latest moving speed the first vehicle sends to the server. Then, the first server may average download speeds at the position P at the time point T based on the historical data to obtain the average value as the download speed of the first vehicle at the position P. For example, if it is a weekday when the first vehicle sends the request for obtaining the estimation of download speeds to the first server, the first server may obtain the average value based on the historical data of weekdays; else, the first server may obtain the average value based on the historical data of weekends. In some embodiments, the first server may obtain the download speed of the first vehicle at the time point T further in consideration of weather and the number of mobile devices connected to a base station which is received from the base station.

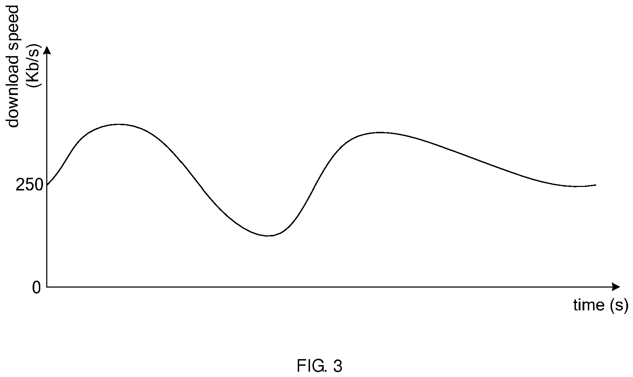

By employing the above method, the first server may obtain estimation of download speeds of the first vehicle along the route. Referring to FIG. 3, in some embodiments, the estimation of download speeds may be represented by a curve which shows corresponding relations between time points and download speeds. The vertical axis represents download speeds of the first vehicle, the lateral axis represents time points on the route of the first vehicle, and the origin of the lateral axis represents a time point when the first server sends the curve to the first vehicle.

In S109, the first vehicle receiving the estimation of download speeds sent from the server and calculating a first time point based on the estimation of download speeds and the information of the program.

In some embodiments, the first time point may stand for a latest time point before which the first vehicle should start to download a part of the program to ensure a fluent experience. In some embodiments, the first time point may be calculated by the head unit of the first vehicle.

In some embodiments, the first vehicle may calculate the first time point based on the estimation of download speeds, the information of the parts of the program, a second time point at which the part of the program starts to be used and the size of the portion of data of the program.

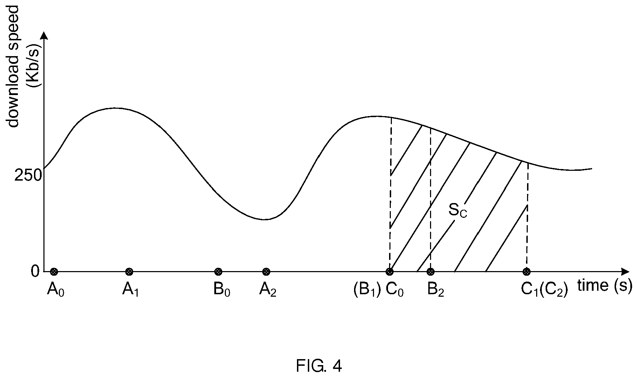

Hereafter, the calculation of the first time point will be described in detail with an example. It should be noted that, the first vehicle may download as much as possible when downloading a first part of the program. From the second part, the first vehicle may estimate a time point and download parts of the program at the time point. In this example, the program may be a video. To estimate a first time point to download one of the parts of the video, the first vehicle may analyze the curve in conjunction with information of parts of the video. Assuming the video consists of three parts and a first part is being used, based on the information of the three parts of the video and a second time point at which a second part starts to be used, the first vehicle can obtain time points at which the three parts are finished playing under a fluent playing situation. Referring to FIG. 4, the points A₀, B₀ and C₀ represent time points of starting to download a first, a second and a third parts, respectively, the points A₁, B₁ and C₁ represent time points of finishing downloading the first, the second and the third parts, respectively, and the points A₂, B₂ and C₂ represent time points of finishing playing the first, the second and the third parts, respectively.

To ensure a fluent experience, the point C₁ of finishing downloading the third part of the video may be on the left of or at least coincide at the point C₂ of finishing playing the third part of the video, on the lateral axis. Since the area formed by the curve and the lateral axis from the point C₀ of starting to download the third video to the point C₁ is the size Sc of the third part, when the point C₁ coincides with the point C₂, the point C₀ may be obtained. Then, the area formed by the curve and the lateral axis from the point C₀ to the point B₂ is compared with the size of the portion of data of the video. If the area is greater than or equal to the size of the portion of data of the video, the point C₀ may ensure a fluent playing of the third part; else, a new point C'₀ may be calculated to ensure the area formed by the curve and the lateral axis from the point C'₀ to the point B₂ is greater than or equal to the size of the portion of data of the video, and then the new point C'₀ is taken as the point C₀. Similarly, the point B₀ may be calculated based on the size of the second part of the video by considering that the point B₁ of finishing downloading the second part coincides with the point C₀. In such, a time point to download the second part and a time point to download the third part may be estimated.

In S111, the first vehicle starting to download a part of the program at the first time point.

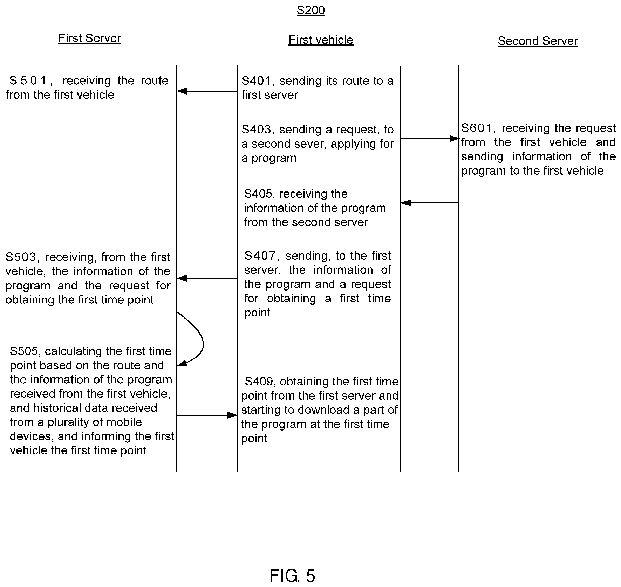

Referring to FIG. 5, FIG. 5 schematically illustrates a flow chart of a method 200 for downloading a program according to a second embodiment.

In S401, a first vehicle sending its route to a first server.

In S501, the first server receiving the route from the first vehicle.

In S403, the first vehicle sending a request, to a second sever, applying for a program.

In S601, the second server receiving the request from the first vehicle and sending information of the program to the first vehicle.

In some embodiments, the information of the program may include content of parts of the program, information of parts of the program and a size of a portion of data of the program. The information of the parts of the program may include a size and duration of each part. The portion of data of the program may represent the least data which ensures the program to be not halted during a playing process.

In S405, the first vehicle receiving the information of the program from the second server.

In S407, the first vehicle sending, to the first server, the information of the program and a request for obtaining a first time point.

In some embodiments, the first time point may stand for a latest time point before which the first vehicle should start to download a part of the program to ensure a fluent experience. In some embodiments, the first vehicle may send the information of parts of the program and the size of the portion of data of the program to the first server, which data are used to calculate the first time point. In some embodiments, the first vehicle may further send a second time point at which the part of the program starts to be used to the first server.

In S503, the first server receiving, from the first vehicle, the information of the program and the request for obtaining the first time point.

In S505, the first server calculating the first time point based on the route and the information of the program received from the first vehicle, and historical data received from a plurality of mobile devices, and informing the first vehicle the first time point.

In some embodiments, the first server may have received a lot of historical data from a plurality of mobile devices, some of which have passed at least a section of the route. In some embodiments, the historical data from the plurality of mobile devices may include position information, download speeds and moving speeds of the plurality of mobile devices, corresponding time points, humidity and signal strength. The server may estimate relations between time points and download speeds of the first vehicle based on the historical data received from the plurality of mobile devices, and the route of the first vehicle. Then the server may further calculate the first time point based on the relations between time points and download speeds along the route of the first vehicle, the information of the parts of the program and the size of the portion of data of the program.

In 409, the first vehicle obtaining the first time point from the first server and starting to download a part of the program at the first time point.

In some embodiments, if the first vehicle accelerates to a new speed suddenly and the speed variance is greater than a predetermined value, for example, 5 km/h, the server may calculate and send a new time point to the first vehicle.

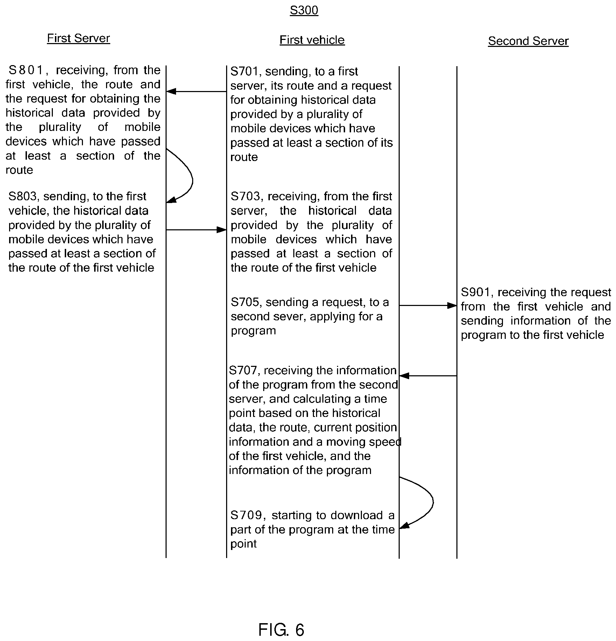

Referring to FIG. 6, FIG. 6 schematically illustrates a flow chart of a method 300 for downloading a program according to a third embodiment.

In S701, a first vehicle sending, to a first server, its route and a request for obtaining historical data provided by a plurality of mobile devices which have passed at least a section of its route.

In some embodiments, the first server may have received a lot of historical data from a plurality of mobile devices, some of which have passed at least a section of the route of the first vehicle. In some embodiments, the historical data from the plurality of mobile devices may include position information, download speeds and moving speeds of the plurality of mobile devices, corresponding time points, humidity and signal strength.

In S801, the first server receiving, from the first vehicle, the route and the request for obtaining the historical data provided by the plurality of mobile devices which have passed at least a section of the route.

In S803, the first server sending, to the first vehicle, the historical data provided by the plurality of mobile devices which have passed at least a section of the route of the first vehicle.

In S703, the first vehicle receiving, from the first server, the historical data provided by the plurality of mobile devices which have passed at least a section of the route of the first vehicle.

In S705, the first vehicle sending a request, to a second sever, applying for a program.

In S901, the second server receiving the request from the first vehicle and sending information of the program to the first vehicle.

In some embodiments, the information of the program may include content of parts of the program, information of parts of the program and a size of a portion of data of the program. The information of the parts of the program may include a size and duration of each part. The portion of data of the program may represent the least data which ensures the program to be not halted during a playing process.

In S707, the first vehicle receiving the information of the program from the second server, and calculating a time point based on the historical data, the route, current position information and a moving speed of the first vehicle, and the information of the program.

The first vehicle may estimate relations between time points and download speeds of the first vehicle based on the historical data, and the route, the current position information and the moving speed of the first vehicle. Then the first vehicle may further calculate the time point based on the relations between time points and download speeds along the route of the first vehicle, the information of the parts of the program and the size of the portion of data of the program.

In S709, the first vehicle starting to download a part of the program at the time point.

By employing the above download methods, a mobile device connected to a wireless network may download content reasonably, thereby getting good user experience.

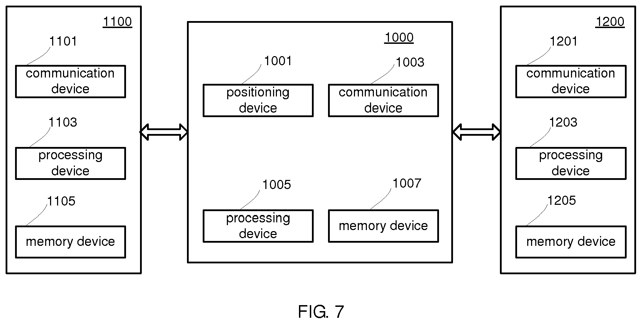

FIG. 7 illustrates a schematic block diagram of a system 1000 which is in communication with a first server 1100 and a second server 1200 according to one embodiment.

In some embodiments, the system 1000 may be a mobile device, such as a head unit mounted on a vehicle or a cell phone. In some embodiments, the system 1000 may communicate with the servers 1100 and 1200 through a wireless network, such as a cellular network.

Referring to FIG. 7, the system 1000 may include a positioning device 1001, a communication device 1003, a processing device 1005 and a memory device 1007.

The positioning device 1001 may be configured to obtain position information and a route of a first vehicle on which the system 1000 is mounted. The communication device 1003 may be configured to obtain moving speeds, download speeds and signal strength of the first vehicle, information of a program to be used and a size of a portion of data of the program. In some embodiments, the information of the program may include content of parts of the program, information of parts of the program and a size of a portion of data of the program. The information of the parts of the program may include a size and duration of each part. The portion of data of the program may represent the least data which ensures the program to be not halted during a playing process.

The processing device 1005 may be configured to: generate a first request for using a program and a second request for obtaining information of download speeds; control the communication device 1003 to send the first request to the server 1100, send the position information, the moving speeds, the download speeds, the signal strength and the route of the first vehicle and the second request to the server 1200, receive information of the program from the server 1100, and receive the information of download speeds from the server 1200; calculate a time point based on the information of download speeds, the information of the program and the portion of data of the program; and instruct the system 1000 to start downloading a part of the program at the time point. In some embodiments, the processing device 1005 may be a CPU, or a MCU, or a DSP etc., or any combination thereof. The memory device 1007 may store an operating system and program instructions.

The first server 1100 may include a communication device 1101, a processing device 1103 and a memory device 1105. The processing device 1103 may be configured to: control the communication device 1101 to receive the first request from the system 1000, and send the information of the program to the system 1000. The memory device 1105 may store the information of the program, an operating system and program instructions.

The second server 1200 may include a communication device 1201, a processing device 1203 and a memory device 1205. The processing device 1203 may be configured to: control the communication device 1201 to receive historical data including position information, signal strength, moving speeds and download speeds sent from a plurality of mobile devices which may include the first vehicle, receive the route of the first vehicle and the second request from the system 1000, and send information of download speeds to the system 1000; and calculate the information of download speeds based on the route of the first vehicle, and the historical data received from the plurality of mobile devices. The memory device 1205 may store the historical data received from the plurality of mobile devices, an operating system and program instructions.

According to one embodiment, a non-transitory computer readable medium, which contains a computer program for downloading a program, is provided. When the computer program is executed by a processor, it will instruct the processor to: obtain its route; obtain information of parts of a program; obtain a first time point, where the first time point is calculated based on the information of the parts of the program and information of download speeds along the route; and control starting to download one of the parts of the program at the first time point.

There is little distinction left between hardware and software implementations of aspects of systems; the use of hardware or software is generally a design choice representing cost vs. efficiency tradeoffs. For example, if an implementer determines that speed and accuracy are paramount, the implementer may opt for a mainly hardware and/or firmware vehicle; if flexibility is paramount, the implementer may opt for a mainly software implementation; or, yet again alternatively, the implementer may opt for some combination of hardware, software, and/or firmware.

While various aspects and embodiments have been disclosed herein, other aspects and embodiments will be apparent to those skilled in the art. The various aspects and embodiments disclosed herein are for purposes of illustration and are not intended to be limiting, with the scope being indicated by the following claims.

## Claims

1. A method for downloading data of an on-line service, comprising:
obtaining, by a mobile device, its route;
obtaining (S109), by the mobile device, a download scheme which is calculated based on information of download speeds along the route, the download scheme including a plurality of time points for starting to download different parts of a program;
downloading (S111), by the mobile device, data of the on-line service according to the download scheme
**characterized in that**:
the information of download speeds along the route is calculated (S205) by a server based on historical data of download speeds along the route and
the download scheme is calculated based on the information of download speeds along the route by the mobile device

2. The method according to claim 1, further comprising:
obtaining (S405), by the mobile device, information of parts of the program;
obtaining (S409), by the mobile device, a first time point of the plurality of time points, where the first time point is calculated based on the information of the parts of the program and the information of download speeds along the route;
and starting (S111), by the mobile device, to download one of the parts of the program at the first time point.

3. The method according to claim 2, wherein obtaining the first time point comprises:
sending (S101), by the mobile device, to the server, the obtained route and a request for obtaining the information of download speeds along the route;
receiving (S109), by the mobile device, from the sever, the information of download speeds along the route; and calulating (S109), by the mobile device, the first time point based on the information of the parts of the program and the received information of download speeds along the route.

4. The method according to claim 2 or 3, wherein obtaining the first time point comprises:
sending (S401, S403), by the mobile device, to the server, the route, the information of the parts of the program and a request for obtaining the first time point; and
obtaining (S409), by the mobile device, the first time point from the sever.

5. A system comprising a mobile device (1000) configured to be mounted on a vehicle for downloading data of an on-line service, and the system comprising a server (1100);
the mobile device comprising a processing device (1005) configured to: obtain a route of the vehicle;
obtain a download scheme which is calculated based on information of download speeds along the route, the download scheme including a plurality of time points for starting to download different parts of a program;
instruct the system to start downloading data of the on-line service according to the download scheme,
**characterized in that**:
the information of download speeds along the route is calculated by the server based on historical data of download speeds along the route and
the download scheme is calculated based on the information of download speeds along the route received from the server by the communication device.

6. The system according to claim 5, wherein the mobile device further comprises a communication device (1101), and the processing device is further configured to:
generate a request for obtaining the information of download speeds along the route;
control the communication device to send, to the server, its route and the request for obtaining the information of download speeds along the route.

7. The system according to claim 5, wherein the processing device is further configured to:
obtain a first time point of the plurality of time points, where the first time point is calculated based on the information of the parts of the program and the information of download speeds along the route; and
instruct the system to start downloading one of the parts of the program at the first time point.

8. The system according to claim 7, wherein the mobile device further comprises a communication device (1101), and the processing device is further configured to:
generate a request for obtaining the information of download speeds along the route;
control the communication device to send, to the server, its route and the request for obtaining the information of download speeds along the route; and
calculate the first time point based on the information of the parts of the program and the information of download speeds along the route received from the server by the communication device and/or
generate a request for obtaining the first time point; and
control the communication device to send, to the sever, its route, the information of the parts of the program and the request for obtaining the first time point.

## Patentansprüche

1. Verfahren zum Downloaden von Daten eines Online-Dienstes, umfassend:
Erhalten seiner Route durch eine mobile Vorrichtung;
Erhalten (S109) eines Download-Schemas durch die mobile Vorrichtung, das basierend auf Informationen über die Download-Geschwindigkeiten entlang der Route berechnet wird, wobei das Download-Schema eine Vielzahl von Zeitpunkten für den Start des Downloads verschiedener Teile eines Programms beinhaltet;
Downloaden (S111) von Daten des Online-Dienstes nach dem Download-Schema durch die mobile Vorrichtung,
**dadurch gekennzeichnet, dass**:
die Informationen über die Download-Geschwindigkeiten entlang der Route von einem Server basierend auf historischen Daten der Download-Geschwindigkeiten entlang der Route berechnet werden(S205) und
das Download-Schema basierend auf den Informationen über die Download-Geschwindigkeiten entlang der Route durch die mobile Vorrichtung berechnet wird.

2. Verfahren nach Anspruch 1, ferner umfassend:
Erhalten (S405) von Informationen über Teile des Programms durch die mobile Vorrichtung;
Erhalten (S409) eines ersten Zeitpunkts aus der Vielzahl von Zeitpunkten durch die mobile Vorrichtung, wobei der erste Zeitpunkt basierend auf den Informationen über die Teile des Programms und den Informationen über die Download-Geschwindigkeiten entlang der Route berechnet wird; und
Starten (S111) durch die mobile Vorrichtung, um einen der Teile des Programms zum ersten Zeitpunkt zu downloaden.

3. Verfahren nach Anspruch 2, wobei das Erhalten des ersten Zeitpunkts Folgendes umfasst:
Senden (S101) der erhaltenen Route und einer Anforderung zum Erhalten der Informationen über die Download-Geschwindigkeiten entlang der Route durch die mobile Vorrichtung an den Server;
Empfangen (S109) der Informationen über die Download-Geschwindigkeiten entlang der Route durch die mobile Vorrichtung von dem Server; und
Berechnen (S109) des ersten Zeitpunkts durch die mobile Vorrichtung basierend auf den Informationen über die Teile des Programms und den empfangenen Informationen über die Download-Geschwindigkeiten entlang der Route.

4. Verfahren nach Anspruch 2 oder 3, wobei das Erhalten des ersten Zeitpunkts Folgendes umfasst:
Senden (S401, S403) der Route, der Informationen über die Teile des Programms und einer Anforderung zum Erhalten des ersten Zeitpunkts durch die mobile Vorrichtung an den Server; und
Erhalten (S409) des ersten Zeitpunkts durch die mobile Vorrichtung von dem Server.

5. System, umfassend eine mobile Vorrichtung (1000), die konfiguriert ist, um an einem Fahrzeug montiert zu werden, um Daten eines Online-Dienstes zu downloaden, und wobei das System einen Server (1100) umfasst;
wobei die mobile Vorrichtung eine Verarbeitungsvorrichtung (1005) umfasst, die konfiguriert ist zum:
Erhalten einer Route des Fahrzeugs;
Erhalten eines Download-Schemas, das basierend auf Informationen über die Download-Geschwindigkeiten entlang der Route berechnet wird, wobei das Download-Schema eine Vielzahl von Zeitpunkten für den Start des Downloads verschiedener Teile eines Programms beinhaltet;
Anweisen des Systems, das Downloaden von Daten des Online-Dienstes nach dem Download-Schema zu starten,
**dadurch gekennzeichnet, dass**:
die Informationen über die Download-Geschwindigkeiten entlang der Route von dem Server basierend auf historischen Daten über die Download-Geschwindigkeiten entlang der Route berechnet werden und
das Download-Schema basierend auf den Informationen über die Download-Geschwindigkeiten entlang der Route berechnet wird, die von dem Server durch die Kommunikationsvorrichtung empfangen werden.

6. System nach Anspruch 5, wobei die mobile Vorrichtung ferner eine Kommunikationsvorrichtung (1101) umfasst und die Verarbeitungsvorrichtung ferner konfiguriert ist zum:
Erzeugen einer Anforderung zum Erhalten der Informationen über die Download-Geschwindigkeiten entlang der Route;
Steuern der Kommunikationsvorrichtung zum Senden ihrer Route und der Anforderung zum Erhalten der Informationen über die Download-Geschwindigkeiten entlang der Route an den Server.

7. System nach Anspruch 5, wobei der Verarbeitungsvorrichtung ferner konfiguriert ist zum:
Erhalten eines ersten Zeitpunkts aus der Vielzahl von Zeitpunkten, wobei der erste Zeitpunkt basierend auf den Informationen über die Teile des Programms und den Informationen über die Download-Geschwindigkeiten entlang der Route berechnet wird; und
Anweisen des Systems, den Download eines der Teile des Programms zum ersten Zeitpunkt zu starten.

8. System nach Anspruch 7, wobei die mobile Vorrichtung ferner eine Kommunikationsvorrichtung (1101) umfasst und die Verarbeitungsvorrichtung ferner konfiguriert ist zum:
Erzeugen einer Anforderung zum Erhalten der Informationen über die Download-Geschwindigkeiten entlang der Route;
Steuern der Kommunikationsvorrichtung zum Senden ihrer Route und der Anforderung zum Erhalten der Informationen über die Download-Geschwindigkeiten entlang der Route an den Server; und
Berechnen des ersten Zeitpunkts basierend auf den Informationen über die Teile des Programms und den Informationen über Download-Geschwindigkeiten entlang der vom Server empfangenen Route durch die Kommunikationsvorrichtung und/oder
Erzeugen einer Anforderung zum Erhalten des ersten Zeitpunkts; und
Steuern der Kommunikationsvorrichtung, um seine Route, die Informationen über die Teile des Programms und die Anforderung, den ersten Zeitpunkt zu erhalten, an den Server zu senden.

## Revendications

1. Procédé de téléchargement de données d'un service en ligne, comprenant :
l'obtention, par un dispositif mobile, de son itinéraire ;
l'obtention (S109), par le dispositif mobile, d'un schéma de téléchargement qui est calculé sur la base d'informations de vitesses de téléchargement le long de l'itinéraire, le schéma de téléchargement incluant une pluralité de points temporels pour démarrer le téléchargement de différentes parties d'un programme ;
le téléchargement (S111), par le dispositif mobile, de données du service en ligne selon le schéma de téléchargement
**caractérisé en ce que** :
les informations de vitesses de téléchargement le long de l'itinéraire sont calculées (S205) par un serveur sur la base de données historiques de vitesses de téléchargement le long de l'itinéraire et le schéma de téléchargement est calculé sur la base des informations de vitesses de téléchargement le long de l'itinéraire par le dispositif mobile.

2. Procédé selon la revendication 1, comprenant en outre :
l'obtention (S405), par le dispositif mobile, d'informations de parties du programme ;
l'obtention (S409), par le dispositif mobile, d'un premier point temporel de la pluralité de points temporels, dans lequel le premier point temporel est calculé sur la base des informations des parties du programme et des informations de vitesses de téléchargement le long de l'itinéraire ; et
le démarrage (S111), par le dispositif mobile, du téléchargement de l'une des parties du programme au premier point temporel.

3. Procédé selon la revendication 2, dans lequel l'obtention du premier point temporel comprend :
l'envoi (S101), par le dispositif mobile, au serveur, de l'itinéraire obtenu et d'une demande d'obtention des informations de vitesses de téléchargement le long de l'itinéraire ;
la réception (S109), par le dispositif mobile, à partir du serveur, des informations de vitesses de téléchargement le long de l'itinéraire ; et
le calcul (S109), par le dispositif mobile, du premier point temporel sur la base des informations des parties du programme et des informations reçues de vitesses de téléchargement le long de l'itinéraire.

4. Procédé selon la revendication 2 ou 3, dans lequel l'obtention du premier point temporel comprend :
l'envoi (S401, S403), par le dispositif mobile, au serveur, de l'itinéraire, des informations des parties du programme et d'une demande d'obtention du premier point temporel ; et
l'obtention (S409), par le dispositif mobile, du premier point temporel à partir du serveur.

5. Système comprenant un dispositif mobile (1000) configuré pour être monté sur un véhicule pour télécharger des données d'un service en ligne, et le système comprenant un serveur (1100) ;
le dispositif mobile comprenant un dispositif de traitement (1005) configuré pour :
obtenir un itinéraire du véhicule ;
obtenir un schéma de téléchargement qui est calculé sur la base d'informations de vitesses de téléchargement le long de l'itinéraire, le schéma de téléchargement incluant une pluralité de points temporels pour démarrer le téléchargement de différentes parties d'un programme ;
ordonner au système de démarrer le téléchargement des données du service en ligne selon le schéma de téléchargement,
**caractérisé en ce que** :
les informations sur les vitesses de téléchargement le long de l'itinéraire sont calculées par le serveur sur la base de données historiques de vitesses de téléchargement le long de l'itinéraire et le schéma de téléchargement est calculé sur la base des informations de vitesses de téléchargement le long de l'itinéraire reçues à partir du serveur par le dispositif de communication.

6. Système selon la revendication 5, dans lequel le dispositif mobile comprend en outre un dispositif de communication (1101), et le dispositif de traitement est en outre configuré pour :
générer une demande d'obtention des informations de vitesses de téléchargement le long de l'itinéraire ;
commander le dispositif de communication pour envoyer, au serveur, son itinéraire et la demande d'obtention des informations de vitesses de téléchargement le long de l'itinéraire.

7. Système selon la revendication 5, dans lequel le dispositif de traitement est en outre configuré pour :
obtenir un premier point temporel de la pluralité de points temporels, où le premier point temporel est calculé sur la base des informations des parties du programme et des informations de vitesses de téléchargement le long de l'itinéraire ; et
ordonner au système de démarrer le téléchargement de l'une des parties du programme au premier point temporel.

8. Système selon la revendication 7, dans lequel le dispositif mobile comprend en outre un dispositif de communication (1101), et le dispositif de traitement est en outre configuré pour :
générer une demande d'obtention des informations de vitesses de téléchargement le long de l'itinéraire ;
commander le dispositif de communication pour envoyer, au serveur, son itinéraire et la demande d'obtention des informations de vitesses de téléchargement le long de l'itinéraire ; et
calculer le premier point temporel sur la base des informations des parties du programme et des informations de vitesses de téléchargement le long de l'itinéraire reçues à partir du serveur par le dispositif de communication et/ou
générer une demande d'obtention du premier point temporel ; et
commander le dispositif de communication pour envoyer, au serveur, son itinéraire, les informations des parties du programme et la demande d'obtention du premier point temporel.
